# EUROPÄISCHE PATENTSCHRIFT

(11) **EP 0 998 545 B1**
(45) Veröffentlichungstag und Bekanntmachung des Hinweises auf die Patenterteilung: **22.05.2002**
(21) Anmeldenummer: 98954142.0
(22) Anmeldetag: 05.09.1998
(51) Int. Cl.: C10M 171/00, C10M 107/34, C09K 5/04

(54) **POLYALKYLENGLYKOLE ALS SCHMIERMITTEL FÜR CO 2-KÄLTEMASCHINEN**
POLYALKYLENEGLYCOLS USED AS LUBRICANTS FOR REFRIGERATING MACHINES USING CO 2
POLYALKYLENEGLYCOLS UTILISES COMME LUBRIFIANTS POUR DES MACHINES FRIGORIFIQUES AU CO 2

(30) Priorität: 08.09.1997 DE 19739288
(43) Veröffentlichungstag der Anmeldung: 10.05.2000
(73) Patentinhaber: RWE-DEA Aktiengesellschaft für Mineraloel und Chemie, 22297 Hamburg (DE)
(72) Erfinder: FAHL, Jörg, D-37197 Hattorf (DE); KNICKMEYER, Rainer, D-20144 Hamburg (DE); PIPE, David, F., D-22301 Hamburg (DE)
(74) Vertreter: Schupfner, Georg U.
(86) Internationale Anmeldenummer: DE9802643
(87) Internationale Veröffentlichungsnummer: WO9913032

(56) Entgegenhaltungen:
- EP-A- 0 551 865
- GB-A- 2 306 497
- US-A- 4 959 169
- U.HESSE, H.O.SPAUSCHUS: "lubricants for carbon dioxide" REFRIGERATION SCIENCE AND TECHNOLOGY, PROCEEDINGS, 3. - 6. September 1996, XP002081402 Aarhus(DK) in der Anmeldung erwähnt
- PATENT ABSTRACTS OF JAPAN vol. 098, no. 006, 30. April 1998 & JP 10 046169 A (IDEMITSU KOSAN CO LTD), 17. Februar 1998

## Beschreibung

Gegenstand der Erfindung sind Betriebsmittelzusammensetzungen enthaltend Schmierstoffe auf Basis von Polyalkylenglykolen, die sich zur Schmierung von Kältemaschinen, Wärmepumpen und verwandter Anlagen, wie Klimaanlagen, die mit Kohlendioxid als Betriebsmittel betrieben werden, eignen.

Kohlendioxid ist bereits zu Beginn der modernen Kältetechnik als Kältemaschinen-Betriebsmittel verwendet worden. So baute die Firma Linde bereits im Jahre 1881 die erste Kompressions-Kältemaschine unter Verwendung von Kohlendioxid als Kältemittel. Noch bis zur Mitte dieses Jahrhunderts wurde Kohlendioxid vorwiegend in Schiffskälteanlagen meist unterhalb seiner kritischen Temperatur (kritischer Punkt Tₖ=31,4°C / pₖ=72,9 bar) eingesetzt. Als Schmierstoff wie auch als Sperrflüssigkeit kam Glyzerin zum Einsatz. Später, mit der Einführung der FCKW-Kältemittel, ist Kohlendioxid kaum noch eingesetzt worden.

Der Ausstieg aus umweltschädigenden Fluor-Chlor-Kohlenwasserstoffen (FCKW) als Kältemaschinen-Betriebsmittel hat dazu geführt, Kohlendioxid als mögliches Betriebsmittel für Kältemaschinen erneut in Betracht zu ziehen. Kohlendioxid ist leicht und günstig verfügbar und übt keinen schädigenden Einfluß auf die Ozonschicht aus. Kohlendioxid zeichnet sich als Kältemaschinen-Betriebsmittel weiterhin durch günstige thermodynamische Eigenschaften, wie z.B. eine relativ hohe volumetrische Kälteleistung und ein niedriges Druckverhältnis (p_{c}/pₛ-Index) sowie einen daraus resultierenden guten Anlagenwirkungsgrad aus.

Erst Ende der 80er Jahre wurde die Entwicklungsarbeit mit dem natürlichen Kältemittel CO₂ wieder aufgenommen. Erste Versuche zeigten die technischen Möglichkeiten eines transkritischen, auch superkritisch genannten, Kohlendioxid-Kreisprozesses mit Drücken von über 100 bar auf.

Inzwischen haben verschiedene Forschungsstellen dieses Konzept aufgegriffen und arbeiten an der Realisierung geeigneter Kälteanlagen. Gleichzeitig wird jedoch auch an der Weiterentwicklung des herkömmlichen Verfahrens im subkritischen Bereich gearbeitet.

Für Kohlendioxid als Kältemaschinenbetriebsmittel sind gegenüber konventionellen Kältemitteln wie Fluor/Chlor- oder Fluor-Kohlenwasserstoffen erhöhte Betriebsdrücke und Betriebstemperaturen erforderlich, die hohe Anforderungen an Dichtungsmaterialien, bewegliche Teile und Schmiermittel stellen. Dies gilt insbesondere für Kältemaschinenanlagen, die in einem transkritischen Kreisprozeß betrieben werden.

Als Schmierstoffe für beide Verfahrensweisen wurden bereits PolyalkylenGlykole vorgeschlagen (siehe z.B. Lubricants for Carbon Dioxide; U. Hesse, H. O. Spauschus in Refrigeration Science and Technology, Proceedings, Aarhus Denmark 3-6 Sept. 1996, ISSN 0 151 163).

Aus der US 4,959,169 sind veresterte Polyetherpolyole als Schmiermittel für Fluorchlorkohlenwasserstoffe und Fluorkohlenwasserstoffe bekannt. Aus der EP 0 551 865 sind ethoxylierte bzw. propoxylierte Polycarbonate als Schmiermittel für Fluorkohlenwasserstoff-Kältemaschinenbetriebsmittel bekannt. Diesen Schriften ist jedoch kein Hinweis auf Kohlendioxid als Betriebsmittel oder auf das Phasen- bzw. Löslichkeitsverhalten und die Schmiereigenschaften oben bezeichneter Verbindungen in Kohlendioxid zu entnehmen.

In einem transkritischen Kreisprozeß werden im Laufe des Kompressionszyklusses Zustände durchlaufen, in denen sich das Kohlendioxid als Betriebsmittel sowohl im subkritischen (unterkritischen) Zustand als auch im superkritischen (überkritischen) Zustand befindet.

Erste Untersuchungen von mit CO₂ betriebenen Klimakreisläufen zeigen, daß aufgrund der guten Mischbarkeit von esterbasischen Schmierstoffen, wie z. B. Polyolestern, eine entsprechend hohe Löslichkeit erzielt wird. Damit verbunden kann es zu einem dramatischen Viskositätsabfall im Bereich des Kältemittelverdichters kommen. Unter den hier herrschenden Bedingungen zeigen nicht mischbare Schmierstoffe, wie z. B. Mineralöle, Polyolefine, Alkylbenzole oder auch Polyalkylenglykole, dagegen nicht den erwähnten Viskositätsabfall. Durch die schlechte Mischbarkeit können jedoch Probleme hinsichtlich des Ölrücktransportes, besonders in den Komponenten Expansionsventil und Verdampfer sowie der Saugleitung, speziell bei niedrigen Strömungsgeschwindigkeiten auftreten. Zum einen muß die Anforderung im Verdichter, d. h. im Schmierspalt entsprechend hohe Gemischviskosität zu erreichen, erfüllt werden, zum anderen muß eine Mischbarkeit bei tiefen Temperaturen im Bereich der Komponenten Verdampfer und Saugleitung gewährleistet sein, um gute Wärmeübergange und die Ölrückführung zu garantieren. Eine sogenannte Teilmischbarkeit, d.h. eine in einem bestimmten Temperaturbereich für gewisse Mischungsverhältnisse vorhandene Mischungslücke, ist hier von großem Interesse. Bedingt durch das vorteilhafte Temperatur- / Löslichkeitsverhalten können für diesen Fall auch Kältemaschinen verwendet werden, die ohne Ölsumpf bzw. Ölrückführung arbeiten.

Die erfindungsgemäßen Polyalkylenglykole erfüllen die zuvor genannten Voraussetzungen überraschenderweise und sind für höhere Massenanteile Schmiermittel in CO₂ über den gesamten Temperaturbereich bis unter -55°C löslich. Bei geringeren Anteilen Schmiermittel sind die erfindungsgemäßen Polyalkylenglykole nicht mehr über den gesamten Temperaturbereich von einer höheren in Kältemaschinen üblichen Temperatur bis etwa -55°C löslich. Vorteilhafterweise sind sie aber ab einem bestimmten unteren Anteil Schmiermittels im Betriebsmittel zumindest unterhalb einer Grenztemperatur erneut löslich in Kohlendioxid.

Der Erfindung liegt das Problem zugrunde, derivatisierte Polyalkylenglykole zu finden, die neben den oben genannten auch folgenden Anforderungen an Schmiermittel für CO₂-Kältemaschinen genügen:
- ausgezeichnete thermische und chemische Stabilität
- sehr gute hydrolytische Stabilität
- sehr gute Schmierungseigenschaften
- eine Mischungslücke für Konzentrationen von etwa 15 bis 30 Gew.% Schmiermittel im Betriebsmittel bei Temperaturen von etwa -55°C bis etwa +30°C
- eine geringe Hygroskopizität
- hohe Verträglichkeit mit Dichtmaterialien und
- gutes Viskositäts-Temperatur-Verhalten.

Dies gilt im besonderen Maße auch für die Anwendungen in CO₂-betriebenen Kältemaschinen, die überkritisch arbeiten. Diese können z.B. vorteilhaft in Automobilen eingesetzt werden.

Überraschend haben sich zur Lösung dieser Aufgaben als geeignet erwiesen: Betriebsmittelzusammensetzungen für Kältemaschinen, Wärmepumpen und verwandte Anlagen, wie Klimaanlagen, enthaltend Kohlendioxid als Betriebsmittel und Polyalkylenglykole bzw. deren Gemische als Schmiermittel, bestehend - bezogen auf die Polymerkette - aus Monomereinheiten des Typs -(-R-O-)-, vorzugsweise mindestens 5 , wobei R eine lineare oder verzweigte, gesättigte Alkylgruppe mit 2 bis 6 Kohlenstoffatomen ist, gegebenenfalls 1 bis 2 weitere Oxy-Gruppen (-O-) aufweist und für jede Monomereinheit verschieden sein kann, wobei zumindest eine Endgruppe eine Ester-Endgruppe mit 1 bis 42, vorzugsweise 2 bis 16 Kohlenstoffatomen ist und/oder eine Carbonatester-Endgruppe mit 1 bis 42, vorzugsweise 1 bis 16 Kohlenstoffatomen ist.

Die Polyalkylenglykole können weitere Endgruppen (ii) aufweisen als solche werden genannt: Wasserstoff-, Alkyl-, Aryl- Alkylaryl-, Hydroxy-, Alkoxy-, Aryloxy-, Alkylaryloxy-Endgruppen, wobei die Kohlenwasserstoffreste 1 bis 10, vorzugsweise 1 bis 6, Kohlenstoffatome und 1 bis 8 Oxy-Gruppen (-O-) vorzugsweise 1 bis 6, aufweisen können.

Polyalkylenglykole sind durch Umsetzung cyclischer Ether wie Ethylenoxid, Propylenoxid oder Tetrahydrofuran mit Initiatoren wie z.B. H[BF₄], AlCl₃ SnCl₃ oder anderen Friedel-Crafts-Catalysatoren, wie sie z.B. bei der kationischen Polymerisation üblich sind, zugänglich. Vielfach lassen sich cyclische Ether aber auch durch Alkohole (Alkoholate), Amine und Mercaptane als Initiatoren polymerisieren (Polyaddition). Aber auch die anionische Polymerisation mit Metallalkoholaten, Aluminiumalkylen, SrCO₃ oder CoCO₃ ist möglich. Auch die Ester- oder Carbonatester-Endgruppe kann nach verschiedenen Methoden eingeführt werden.

Die Ester-Endgruppen der erfindungsgemäßen Polyalkylenglykole enthalten vorzugsweise 2 bis 16 Kohlenstoffatome, bezogen auf die Säure-Gruppe. Sie sind z.B. herstellbar durch Umsetzung mit einer Monocarbonsäure und /oder Polycarbonsäure bzw. einem Carbonsäure-Derivat. Die Carbonatester-Endgruppen der erfindungsgemäßen Polyalkylenglykole enthalten vorzugsweise 1 bis 16 Kohlenstoffatome, bezogen auf die -O-C(=O)-O-(R)-Endgruppe.

Für die erfindungsgemäßen Polyalkylenglykole werden besonders gute Ergebnisse hinsichtlich guter Schmiereigenschaften einerseits und den oben aufgeführten Eigenschaften andererseits erzielt, wenn das Polyalkylenglykol als Hauptkomponente Monomereinheiten des Typs -(-CH(CH₃)-CH₂-O)-, -(-CH₂-CH(CH₃)-O)-, -(-CH(CH₂CH₃)-CH₂-O)-, -(-CH₂-CH(CH₂CH₃)₂-O)-, -(-CH(CH₃)-CH(CH₃)-O)-und/oder-(-CH₂-CH₂-CH₂-CH₂-O)-,nämlich zu mindestens 40%, vorzugsweise mindestens 60% enthält.

Die erfindungsgemäßen Polyalkylenglykole sind somit entweder Homopolymere, z.B. Polypropylenglykol (bzw. Polypropylenoxid), Copolymere oder Terpolymere usw. Für die letzteren Fälle können die Monomereinheiten eine statistische Verteilung oder eine Blockstruktur aufweisen.

In einer weiteren Ausführungsform der Erfindung sind die neben den C3- und/oder C4-Alkyloxid (/ Ether)-Einheiten (-R-O-)- in der Polymerkette verbleibenden Monomereinheiten C2-Alkyloxid-(/ Ether)-Einheiten (-R-O-)-. Diese sind für diesen Ausführungsfall vorzugsweise zu mindestens 10 % in der Polymerkette enthalten.

Die erfindungsgemäßen Polyalkylenglykole können durch Umsetzung von Alkoholen, einschließlich der Polyalkohole, als Starterverbindungen mit Alkylenoxiden wie Ethylenoxid, Propylenoxid und/oder Butylenoxid hergestellt werden. Die Startverbindung wird bei Verwendung von Polyalkoholen in das Polymer eingebaut und im Sinne der Erfindung auch als Endgruppe (ii) der Polymerkette bezeichnet. Geeignete Startgruppen sind Verbindungen, die aktiven Wasserstoff enthalten, wie z.B. n-Butanol, Propylenglykol, Ethylenglykol, Neopentylglykole wie Pentaerythritol, Ethylendiamin, Phenol, Cresol, Hydroquinon, Aminoethanolamine, Triethylentetramine, Polyamine, Sorbitol oder andere Zucker. Zur Herstellung der Ester-Endgruppe wird in einem Veresterungsschritt z.B. eine freie Hydroxygruppe verestert. Wird zur Veresterung eine Polycarbonsäure eingesetzt, so werden - vorausgesetzt die Polycarbonsäure wird vollständig verestert - die Ester-Gruppen in die Polymerkette eingebaut. Eine in die Polymerkette eingebaute Ester-Gruppe wird im Sinne der Erfindung auch als Endgruppe (i) der Polymerkette bezeichnet. Die Ester-Endgruppe kann 1 bis 4 Carboxyl-Gruppen (-C(=O)O-) aufweisen.

Die Polyalkylenglykol-Carbonatester sind z.B. durch Umesterung in Gegenwart von Basen aus den Dialkylcarbonaten, vorzugsweise Dimethylcarbonat und Diethylcarbonat, in Gegenwart von Polyalkylglykolen zugänglich. Die Carbonatester-Gruppe kann hierbei nicht nur am Ende des Polyalkylglykol-Moleküls eingebaut werden, sondern kann ihrerseits in einer weiteren Veresterungsreaktion Startpunkt für eine Polykondensationsreaktion sein, so daß die Carbonatester-Gruppe nach der Umsetzung zwei Polyalkylenglykol-Gruppen trägt. Eine in die Polymerkette eingebaute Carbonatgruppe wird im Sinne der Erfindung auch als Endgruppe (i) der Polymerkette bezeichnet.

Besonders bevorzugt hinsichtlich der Stabilität, Hygroskopizität und Kompatibilität sind erfindungsgemäße Polyalkylenglykole, die keine freien Hydroxygruppen mehr aufweisen.

Die erfindungsgemäßen Polyalkylenglykole haben vorzugsweise ein mittleres Molekulargewicht (Zahlenmittel) von 400 bis 3000 g/mol, besonders bevorzugt von 600 bis 1800 g/mol. Die kinematische Viskosität der Polyalkylenglykole liegt vorzugsweise bei 10 bis 400 mm²/s (cSt) bei 40°C gemessen nach DIN 51562.

Die Betriebsmittelzusammensetzung enthält im allgemeinen zwischen 1 und 15 Gew.% Schmiermittel - diese Größe kann jedoch abhängig vom Typ der Kältemaschine auch außerhalb des angegebenen Bereichs liegen -, wobei vorzugsweise mindestens 40 Gew.% der Zusätze zum Betriebsmittel erfindungsgemäße Polyalkylenglykole, bezogen auf alle Inhaltsstoffe des Betriebsmittels, sind.

Das erfindungsgemäße Schmiermittel weist in dem Bereich zwischen größer 0 und 20 Gew.%, vorzugsweise größer 0 und 5 Gew.%, Konzentration des Schmiermittels im Kältemittel bei Temperaturen von 15°C und tiefer (bis -55°C) sowie im Bereich von 30 und 60 Gew.% Konzentration im relevanten Temperaturbereich von -55°C bis +30°C vollständige Mischbarkeit mit dem Betriebsmittel auf. Außerhalb dieser Bereiche , d.h. z.B. zwischen 20 und 30 Gew.% Schmiermittel im Kältemittel, liegt eine Mischungslücke vor.

Zusätzlich können in der Betriebsmittelzusammensetzung übliche Additive wie Verschleißverbesserer, Anti-Schaummittel, Antioxidantien, wie alkylierte phenolische Antioxidantien (insbesondere Irganox® L101), Viskositätsindex-Verbesserer, Korrosionsschutzmittel oder auch Hochdruck-Additive, wie insbesondere Phosphorsäureester (insbesondere Tricresylphosphat) enthalten sein. Weiterhin können die erfindungsgemäßen Polyalkylenglykole zusammen mit Neopentylpolyolestern, vorzugsweise solchen aus der DE 197 19 132, und/oder Polyalkylenglykolen, vorzugsweise solchen aus der DE 197 19 430, als Schmiermittel eingesetzt werden.

Die Betriebsmittel werden in Kältemaschinen, Wärmepumpen und verwandten Anlagen, wie Klimaanlagen, vorzugsweise in Kältemaschinen für Fahrzeuge verwendet, besonders bevorzugt in solchen Kälteanlagen, die keine Vorrichtungen für eine Ölrückführung innerhalb des Betriebsmittelkreislaufes enthalten.

Versuche haben die Wirksamkeit der erfindungsgemäßen Polyalkylenglykole als Schmiermittel in CO₂-Kältemaschinen unter Beweis gestellt. Eine Mischung Polypropylenglykol-mono-n-butylether mit Acetatester-Endgruppe in CO₂ weist die erwünschte Mischungslücke im Bereich von 10 bis 30 Gew.% Schmiermittel im Kältemittel über den gesamten Temperaturbereich (gemessen -55°C bis +30°C) auf, ist aber bei hohen Anteilen Polypropylenglykol im Kältemittel und bei geringen Anteilen Polypropylenglykol im Kältemittel und niedrigeren Temperaturen vollständig löslich.

## Patentansprüche

1. Betriebsmittelzusammensetzungen für Kältemaschinen enthaltend Kohlendioxid als Kältemittel und Polyalkylenglykole bzw. deren Gemische, wobei die Polyalkylenglykole
- in der Polymerkette bestehen aus Monomereinheiten des Typs -(-R-O-)-, wobei R eine lineare oder verzweigte, gesättigte Alkylgruppe mit 2 bis 6 Kohlenstoffatomen ist, gegebenenfalls 1 bis 2 weitere Oxy-Gruppen (-O-) aufweist und für jede Monomereinheit verschieden sein kann,
und
- Endgruppen aufweisen, wobei
(i) zumindest eine Endgruppe eine Ester-Endgruppe und/oder eine Carbonatester-Endgruppe mit 1 bis 42 Kohlenstoffatomen ist.
und die Polyalkylenglykole
(a) im Bereich zwischen größer 0 bis 20 Gew.% Polyalkylenglykol in Kohlendioxid zumindest in Teilbereichen bei Temperaturen von 15°C und tiefer (bis - 55°C) sowie im Bereich von 30 und 60 Gew.% Konzentration von relevanten Temperaturbereich von -55°C bis +30°C in Kohlendioxid löslich sind und
(b) zwischen 20 und 30 Gew.% Polyalkylenglykol in Kohlendioxid zumindest in Teilbereichen eine Mischungslücke vorliegt.

2. Betriebsmittelzusammensetzung nach einem der vorhergehenden Ansprüche, **dadurch gekennzeichnet, daß** die Polyalkylenglykole bzw. deren Gemische, als weitere Endgruppen aufweisen
(ii) zumindest eine Wasserstoff-, Alkyl-, Aryl- Alkylaryl-, Hydroxy-, Alkoxy-, Aryloxy- und/oder Alkylaryloxy-Endgruppe, wobei die Kohlenwasserstoffreste 1 bis 10, vorzugsweise 1 bis 6, Kohlenstoffatome und 1 bis 8 Oxy-Gruppen (-O-) aufweisen können.

3. Betriebsmittelzusammensetzung nach einem der vorhergehenden Ansprüche, **dadurch gekennzeichnet, daß** die Polyalkylenglykole bzw. deren Gemische mindestens 40%, vorzugsweise mindestens 60%, der Monomereinheiten des Typs -(-CH(CH₃)-CH₂-O)-, -(-CH₂-CH(CH₃)-O)-, -(-CH(CH₂CH₃)-CH₂-O)-, -(-CH₂-CH(CH₂CH₃)₂-O)-, -(-CH(CH₃)-CH(CH₃)-O)- und/oder -(-CH₂-CH₂-CH₂-CH₂-O)- enthalten.

4. Betriebsmittelzusammensetzung nach Anspruch 3, **dadurch gekennzeichnet, daß** die Betriebsmittelzusammensetzung Polyalkylenglykole bzw. deren Gemische enthält, deren nach Anspruch 3 verbleibende Monomereinheiten Ethylenoxid-Einheiten sind bzw. aus Ethylenoxid hergestellt sind.

5. Betriebsmittelzusammensetzung nach einem der vorhergehenden Ansprüche, **dadurch gekennzeichnet, daß** die Betriebsmittelzusammensetzung Polyalkylenglykole bzw. deren Gemische enthält, die pro Molekül als Endgruppe des Typs (ii) zumindest eine Alkoxy-Gruppe mit 1 bis 6 Kohlenstoffatomen und 2 bis 6 Oxy-Gruppen (-O-) aufweisen, herstellbar durch Verwendung eines Polyhydroxyalkohols als Startverbindung.

6. Betriebsmittelzusammensetzung nach einem der vorhergehenden Ansprüche, **dadurch gekennzeichnet, daß** die Betriebsmittelzusammensetzung Polyalkylenglykole bzw. deren Gemische enthält, die pro Molekül als Endgruppe des Typs (i) zumindest eine Ester-Endgruppe aufweisen, deren Säure-Gruppe 2 bis 16 Kohlenstoffatome enthält und die herstellbar ist durch Umsetzung mit einer Monocarbonsäure und /oder Polycarbonsäure bzw. einem Carbonsäure-Derivat.

7. Betriebsmittelzusammensetzung nach einem der vorhergehenden Ansprüche, **dadurch gekennzeichnet, daß** die Betriebsmittelzusammensetzung Polyalkylenglykole bzw. deren Gemische enthält, die pro Molekül als Endgruppe des Typs (i) zumindest eine Carbonatester-Endgruppe mit 1 bis 16 Kohlenstoffatomen aufweisen.

8. Betriebsmittelzusammensetzung nach einem der vorhergehenden Ansprüche, **dadurch gekennzeichnet, daß** die Betriebsmittelzusammensetzung Polyalkylenglykole bzw. deren Gemische enthält, die ein mittleres Molekulargewicht von 400 bis 3000 g/mol, besonders bevorzugt von 600 bis 1800 g/mol aufweisen.

9. Betriebsmittelzusammensetzung nach einem der vorhergehenden Ansprüche, **dadurch gekennzeichnet, daß** die Betriebsmittelzusammensetzung mindestens 40 Gew.% Polyalkylenglykole gemäß einem der vorhergehenden Ansprüche, bezogen auf alle Inhaltsstoffe des Betriebsmittel, enthält.

10. Verwendung der Betriebsmittelzusammensetzung gemäß einem der vorhergehenden Ansprüche in Kältemaschinen, vorzugsweise in Fahrzeugen.

## Claims

1. Working composition for refrigeration machines comprising carbon dioxide as refrigerant and polyalkylene glycols or mixtures thereof, wherein the polyalkylene glycols
- in the polymer chain consist of monomer units of the type -(-R-O-)-, whereby R is a linear or branched, saturated alkyl group with 2 to 6 carbon atoms, optionally comprises 1 to 2 further oxy groups (-O-) and can be different for each monomer unit,
and
- comprise end groups, wherein
(i) at least one end group is an ester end group and/or a carbonate ester end group with 1 to 42 carbon atoms,
and the polyalkylene glycols
(a) are dissolvable in carbon dioxide in the range between greater than 0 to 20 % by weight of polyalkylene glycol in carbon dioxide, at least in partial ranges at temperatures of 15 °C and lower (down to -55 °C) as well as in the range between 30 to 60 % by weight concentration in the relevant temperature range of -55 to +30 °C and
(b) between 20 to 30 % by weight of polyalkylene glycol in carbon dioxide, a miscibility gap is present at least in partial ranges.

2. Working composition according to one of the previous claims, **characterised in that** the polyalkylene glycols or mixtures thereof comprise as further end groups
(ii) at least one hydrogen, alkyl, aryl, alkylaryl, hydroxy, alkoxy, aryloxy and/or alkylaryloxy end group whereby the carbohydrate residues comprise 1 to 10, preferably 1 to 6, carbon atoms and 1 to 8 oxy groups (-O-).

3. Working composition according to one of the previous claims, **characterised in that** the polyalkylene glycols or mixtures thereof comprise at least 40 %, preferably 60 %, of monomer units of the type -(-CH(CH₃)-CH₂-O)-, -(-CH₂-CH(CH₃)-O)-, -(-CH(CH₂CH₃)-CH₂-O)-, -(-CH₂-CH(CH₂CH₃)₂-O)-, -(-CH(CH₃)-CH(CH₃)-O)- and/or -(-CH₂-CH₂-CH₂-CH₂-O)-.

4. The working composition according to claim 3, **characterised in that** the working composition contains polyalkylene glycols or mixtures thereof, the monomer units of which, remaining in accordance with claim 3, are ethylene oxide units or are produced of ethylene oxide.

5. The working composition according to one of the previous claims, **characterised in that** the working composition contains polyalkylene glycols or mixtures thereof which. per molecule, as an end group of type (ii), comprise at least one alkoxy group with 1 to 6 carbon atoms and 2 to 6 oxy groups (-O-), obtainable by using polyhydroxy alcohol as a starter compound.

6. The working composition according to one of the previous claims, **characterised in that** the working composition contains polyalkylene glycols or mixtures thereof which per molecule, as an end group of type (i) , comprise at least one ester end group the acid group of which contains at least 2 to 16 carbon atoms and which is obtainable by reaction with a monocarbon acid and/or polycarbon acid or a carbon acid derivative.

7. Working composition according to one of the previous claims, **characterised in that** the working composition contains polyalkylene glycols or mixtures thereof which per molecule, as an end group of type (i), comprise at least one carbonate ester end group with 1 to 16 carbon atoms.

8. Working composition according to one of the previous claims, **characterised in that** the working composition contains polyalkylene glycols or mixtures thereof which have an average molecular weight of 400 to 3000 g/mol, particularly preferred 600 to 1800 g/mol.

9. Working composition according to one of the previous claims, **characterised in that** the working composition contains at least 40 % by weight of polyalkylene glycols according to one of the previous claims, relative to all components of the Working composition.

10. Use of the working composition in according to one of the previous claims in refrigeration machines, preferably in vehicles.

## Revendications

1. Compositions de substance d'exploitation pour machines frigorifiques contenant de l'anhydride carbonique comme substance frigorifique et des glycols de polyalkylène ou des mélanges de ceux-ci
- les glycols de polyalkylène consistant en unités monomères du type -(-R-O-)-, R étant un groupe d'alkyls linéaire ou ramifié avec 2 ou 6 atomes de carbone, présentant le cas échéant 1 à 2 autres groupes oxy (-O-) et pouvant être différent pour chaque unité monomère,
et
- présentant des groupes terminaux,
(i) au moins un groupe terminal d'un groupe terminal ester et/ou un groupe terminal carbonate/ester ayant 1 à 42 atomes de carbone,
et
(a) les glycols de polyalkylène étant, dans la fourchette allant de supérieur à 0 jusqu'à 20 % en poids de glycol de polyalkylène étant, du moins dans des zones partielles à des températures de 15° C et plus basses (jusqu'à - 55 °C) ainsi que dans la fourchette de concentration de 30 à 60 % en poids dans la fourchette de température correspondante de - 55 °C à + 30 °C, solubles dans l'anhydride carbonique,
(b) entre 20 et 30 % en poids de glycol de polyalkylène, une lacune de miscibilité dans l'anhydride carbonique apparaissant, du moins dans des zones partielles.

2. Composition de substance d'exploitation selon une des revendications précédentes, **caractérisée en ce que** les glycols de polyalkylène ou mélanges de ceux-ci comportent comme autres groupes terminaux :
(ii) au moins un groupe terminal oxygène, alkyl, aryl, alkylaryl, hydroxy, alkoxy, aryloxy et/ou alkylaryloxy, les résidus d'hydrocarbure pouvant présenter de 1 à 10, de préférence de 1 à 6 atomes de carbone et de 1 à 8 groupes oxy (-O-).

3. Composition de substance d'exploitation selon une des revendications précédentes, **caractérisée en ce que** les glycols de polyalkylène ou mélanges de ceux-ci contiennent au moins 40 %, de préférence au moins 60 %, des unités monomères du type - (CH(CH₃)-CH₂-O)-, -(-CH₂-CH(CH₃)-O)-, (-CH(CH₂-CH₃)-CH₂-O)-, (-CH₂-CH(CH₂-CH₃)₂-O)-, -(-CH(CH₃)-CH(CH₃)-O)- et/ou - (-CH₂-CH₂-CH₂-CH₂-O)-.

4. Composition de substance d'exploitation selon la revendication 3, **caractérisée en ce que** la composition de substance d'exploitation contient des glycols de polyalkylène ou mélanges de ceux-ci dont les unités monomères restantes selon la revendication 3 sont des unités d'oxyde d'éthylène ou sont fabriquées à partir d'oxyde d'éthylène.

5. Composition de substance d'exploitation selon une des revendications précédentes, **caractérisée en ce que** la composition de substance d'exploitation contient des glycols de polyalkylène ou mélanges de ceux-ci qui présentent par molécule, comme groupe terminal du type (ii), au moins un groupe alkoxy avec 1 à 6 atomes de carbone et 2 à 6 groupes oxy (-O-) pouvant être élaborés par utilisation d'un alcool polyhydroxy comme liaison de départ.

6. Composition de substance d'exploitation selon une des revendications précédentes, **caractérisée en ce que** la composition de substance d'exploitation contient des glycols de polyalkylène ou mélanges de ceux-ci qui présentent par molécule, comme groupe terminal du type (i), au moins un groupe terminal ester dont le groupe acides contient 2 à 16 atomes de carbone et qui peut être élaboré par transposition avec un acide monocarbonique et/ou un acide polycarbonique ou un dérivé d'acide carbonique.

7. Composition de substance d'exploitation selon une des revendications précédentes, **caractérisée en ce que** la composition de substance d'exploitation contient des glycols de polyalkylène ou mélanges de ceux-ci qui présentent par molécule, comme groupe terminal du type (i), au moins un groupe terminal ester carbonate avec 1 à 16 atomes de carbone.

8. Composition de substance d'exploitation selon une des revendications précédentes, **caractérisée en ce que** la composition de substance d'exploitation contient des glycols de polyalkylène ou mélanges de ceux-ci qui présentent un poids moléculaire moyen de 400 à 3000 g/mol, particulièrement de préférence de 600 à 1800 g/mol.

9. Composition de substance d'exploitation selon une des revendications précédentes, **caractérisée en ce que** la composition de substance d'exploitation contient au moins en poids, en proportion de tous les composés de la substance d'exploitation, 40 % de glycols de polyalkylène selon une des revendications précédentes.

10. Utilisation de la composition de substance d'exploitation selon une des revendications précédentes dans des machines frigorifiques, de préférence dans des véhicules.
